**Europäisches Patentamt**

**European Patent Office**

**Office européen des brevets**

(19)

(11) Veröffentlichungsnummer: **0 590 183 B1**

# (12) EUROPÄISCHE PATENTSCHRIFT

(45) Veröffentlichungstag der Patentschrift: **26.04.95**

(51) Int. Cl.⁶: **B61F 5/38**, B61C 15/14

(21) Anmeldenummer: **92116655.9**

(22) Anmeldetag: **29.09.92**

---

(54) **Verfahren und Vorrichtung zur Verbesserung der Laufeigenschaft eines Radblock-Drehgestells.**

(43) Veröffentlichungstag der Anmeldung:
**06.04.94 Patentblatt 94/14**

(45) Bekanntmachung des Hinweises auf die
Patenterteilung:
**26.04.95 Patentblatt 95/17**

(84) Benannte Vertragsstaaten:
**AT BE CH DE ES FR GB IT LI NL**

(56) Entgegenhaltungen:
**DE-A- 3 345 260**

(73) Patentinhaber: **SIEMENS AKTIENGESELL-
SCHAFT
Wittelsbacherplatz 2
D-80333 München (DE)**

(72) Erfinder: **Reng, Leonhard, Dipl.-Ing.
Dr. Wölfel-Strasse 4
W-8522 Herzogenaurach (DE)**

---

EP 0 590 183 B1

## Beschreibung

Die Erfindung bezieht sich auf ein Verfahren und eine Vorrichtung zur Verbesserung der Laufeigenschaft eines mit mehreren Einzelrädern versehenen Fahrwerks eines Schienenfahrzeugs, deren Fahrmotoren mittels zweier Steuer- und Regeleinrichtungen radblockweise gespeist werden.

Schienenfahrzeuge bestehen aus Wagenkasten und Fahrwerk. Das Fahrwerk hat zwei Aufgaben: Es übernimmt die Führung des Fahrzeugs im Spurkanal des Gleises, und es muß den Wagenkasten vor Stößen schützen.

Die Spurführung ist ideal, wenn das Fahrzeug der Gleismitte exakt folgt. Das Spurführungsverhalten des Fahrwerks nähert sich der idealen Spurführung, je schneller Abweichungen von der Gleisachse korrigiert werden.

Anhand von nur zwei Größen läßt sich das Spurführungsverhalten schnell beurteilen:
- dem Abbau eines Querversatzes und
- dem Abbau einer Schrägstellung im Gleis.

Zum Querverschieben werden Kräfte, zum Abbau der Schrägstellung wird ein Wendemoment benötigt. Letzteres erfordert wiederum Kräfte, die mit einem Hebelarm um einen geeigneten Drehpunkt oder als Kräftepaar das gewünschte Moment liefern.

In der Rad/Schiene-Berührungsfläche entstehen Kräfte, die zum Führen herangezogen werden können. Abhängig vom physikalischen Effekt sind zwei grundsätzlich verschiedene Arten von Kräften zu unterscheiden.

Es sind Kraftschlußkräfte, wenn das Rad im Radaufstandpunkt relativ zur Schiene quer oder längs gleitet. Das Produkt aus Relativgeschwindigkeit und Kraftschlußkraft ist eine Kraftschlußverlustleistung. Sie macht sich als Spurführungswiderstand bemerkbar und wird im Rad/Schiene-Kontakt in Wärme und Verschleiß an Rad und Schiene umgesetzt. Auch das Rollgeräusch hängt eng damit zusammen.

Im Aufsatz "Aspekte zur Spurführung" abgedruckt in der Zeitschrift "ZEV-Glas.Ann. 114 (1990), Nr. 1/2, Seiten 24 bis 29, werden verschiedene Spurführungsprinzipien vorgestellt und hinsichtlich des Spurführungsverhaltens untersucht.

Aus diesem Aufsatz ist das Spurführungsprinzip "Radblock" bekannt. Beim Radblock werden zwei Einzelräder verwendet, die nicht nebeneinander, sondern hintereinander angeordnet sind. Die hintereinander angeordneten Einzelräder erweisen sich als nahezu ideal zur Korrektur von Schrägstellungen. Am schrägstehenden Radblock greifen an beiden Rädern wegen desselben Schräglaufwinkels $\delta$ gleichgroße Kraftschlußquerkräfte an. In Bezug auf den Drehpunkt kompensieren sie die dadurch entstehenden Wendemomente. Der Radblock befindet sich aus dieser Sicht immer in einer indifferenten Gleichgewichtslage. Aus jeder beliebigen Stellung des Phasendiagramms des Radblocks werden die Querauslenkungen und eine Schrägstellung sehr schnell auf Werte um Null reduziert. Der Radblock baut sowohl den Querversatz als auch Schrägstellungen mit Profil-Seitenkräften und damit verschleißfrei ab. Das Spurführungsprinzip Radblock käme dem Ideal sehr nahe, wenn es keine Kraftschlußlängskräfte, wie bei angetriebenen Rädern, gäbe.

Aus der EP 0 374 290 A1 ist ein Schienenfahrzeug bekannt, das entlang der Fahrzeuglängsachse beidseitig eine vorgebbare Zahl von Einzelrädern umfaßt, die durch Lenkung schwenkbar sind. Eine spurfehlerfreie Lenkung jedes Einzelrades in allen Kurvenbereichen wird dadurch erreicht, daß eine Schienenverlauf-Meßeinrichtung vorgesehen ist, die die Abweichung einer Fahrzeugachse vom Verlauf der Schiene mißt und die abhängig von gemessenen Abweichungen ein Lenksignal für jedes Einzelrad unabhängig vom jeweils anderen erzeugt. Somit wird jedes Einzelrad in jeder beliebigen Kurvenlage immer korrekt so gelenkt, daß Spurfehler nicht mehr auftreten können.

Aus dem genannten Aufsatz ist außerdem das Spurführungsprinzip "Radsatz" bekannt. Radsätze haben zwei Räder, die fest mit der Radsatzwelle verbunden sind. Dies bedingt, daß die Räder mit derselben Drehschnelle rotieren. Außerdem erfahren beide Räder zwangsweise die gleiche Schrägstellung zum Gleis, wenn der Radsatz um eine Hochachse gewendet wird. Ein Querversatz löst unmittelbar eine ebenso unerwünschte Schrägstellung aus infolge von auftretenden Kraftschluß-Längskräften. So wie eine Querauslenkung zu einer Schrägstellung führt, zieht umgekehrt die Schrägstellung eine Querauslenkung nach sich. Beide Bewegungen sind eng miteinander gekoppelt. Sie ändern sich voneinander abhängig im ständigen Wechsel. Einmal ausgelenkt, kommt der Radsatz nicht mehr zur Ruhe. Wie bekannt, bewegt sich ein Radsatz wellenförmig im Spurkanal (Sinuslauf), wobei ein Anlaufen an den Spurkranz bei geraden Gleisstrecken nicht zu erwarten ist.

Bei Kurvenfahrt sollten im Idealfall die Radebenen tangential zur Schiene stehen. Ein zwängungsfreies Abrollen der Räder ist trotzdem nur dann garantiert, wenn die Abrollradien der Räder den Bogenlängen der beiden Fahrschienen verhältnismäßig gleich sind. Dies ermöglicht einen Querversatz. Die notwendige Differenz der Abrollhalbmesser aufgrund der Konizität der Radprofile beider Räder ergibt sich zu der bekannten Abrollbedingung des Radsatzes. Wenn infolge der Gleisführung die notwendige Differenz der Abrollhalbmesser größer ist als die mögliche Differenz aufgrund des Radprofils, können die Räder nicht mehr zwängungsfrei abrollen. D.h., das kurvenäußere Rad dreht daher zu langsam, das kurzveninnere zu schnell. In Bezug auf die Hochachse entsteht durch die unterschiedlichen Kraftschlußlängskräfte ein Wendemoment, welches das Fahrwerk, auch Drehgestell genannt, aus dem Bogen herausdreht. Das Gegenmoment kann nur durch die Kraftschlußquerkräfte bzw. durch ein Anlaufen des Spurkranzes mit entsprechendem Verschleiß aufgebracht werden.

Ein Drehgestell mit Starrachsverhalten zeigt auf Geraden gute Laufeigenschaften (klassischer Sinuslauf), jedoch bei Kurvenfahrten, wenn die Abrollbedingung infolge zu geringem Bogenradius nicht mehr gegeben ist, kann ein ständiges Anlaufen nicht mehr verhindert werden.

Der Erfindung liegt nun die Aufgabe zugrunde, ein Verfahren und eine Vorrichtung zur Verbesserung der Laufeigenschaft eines Radblock-Drehgestells anzugeben.

Diese Aufgabe wird erfindungsgemäß gelöst durch die im Anspruch 1 angegebenen Merkmale.

Durch die erfindungsgemäße Verknüpfung jeweils der Raddrehzahlen der Einzelräder jedes Radblocks und deren Verknüpfung zu einem Drehzahldifferenz-Istwert, erhält man eine Aussage über die tatsächliche momentane Drehzahldifferenz zwischen linksseitigem und rechtsseitigem Radblock. Dieser Drehzahldifferenz-Istwert wird mit einem vorbestimmten Drehzahldifferenz-Sollwert verglichen, der eine zum Kurvenradius passende Drehzahldifferenz angibt. Aus der Regelabweichung zwischen Drehzahldifferenz-Sollwert und -Istwert wird eine Stellgröße erzeugt, die zu bzw. von einem Fahrhebel-Sollwert addiert bzw. subtrahiert wird, so daß sich die gewünschte Drehzahldifferenz einstellt. Dadurch erhält man für die Steuer- und Regeleinrichtung jedes Radblocks des Fahrwerks einen Sollwert, mit dem bei Kurvenfahrt mit beliebigem Bogenradius die Abrollbedingung erfüllt wird, wodurch sich die Laufeigenschaft dieses Fahrwerks gegenüber einer Starrachse bei Kurvenfahrt wesentlich verbessert.

Somit wird das gute Spurführungsverhalten einer Starrachse im geraden Gleis durch eine geeignete Drehzahldifferenzregelung auch bei Kurvenfahrten gewährleistet.

Eine erfindungsgemäße Vorrichtung ist durch die im Anspruch 4 aufgeführten Merkmale festgelegt. Diese Vorrichtung besteht aus Addierern, Vergleichern, einem Konstantglied und einem Regler, wodurch der Aufbau sehr einfach und preiswert ist.

Bei einer weiteren Ausführungsform der Vorrichtung wird der Drehzahldifferenz-Sollwert in Abhängigkeit eines ermittelten Winkels, der gemessenen Raddrehzahlen und der Anzahl der Einzelräder des Drehgestells ermittelt. Dadurch wird der Drehzahldifferenz-Sollwert jeweils passend zum Kurvenradius gemäß der Abrollbedingung berechnet.

Bei einer vorteilhaften Ausführungsform der Vorrichtung zur Durchführung des erfindungsgemäßen Verfahrens besteht die überlagerte Drehzahldifferenzregelung mit der Berechnung des Drehzahldifferenz-Sollwertes aus einem Mikrorechner, wobei sogar dieser Mikrorechner Bestandteil einer übergeordneten Fahrzeugsteuerung sein kann.

Zur weiteren Erläuterung des erfindungsgemäßen Verfahrens zur Verbesserung der Laufeigenschaft eines mit mehreren Einzelrädern versehenen Fahrwerks wird auf die Zeichnung Bezug genommen, in der mehreren Ausführungsformen schematisch veranschaulicht sind.

Figur 1     zeigt schematisch ein Drehgestell mit einem Stellmoment, den Kraftschlußlängskräften und den Querkräften, in

Figur 2     ist ein Blockschaltbild einer erfindungsgemäßen Drehzahldifferenzregelung veranschaulicht und die

Figur 3     zeigt ein Blockschaltbild einer vorteilhaften Drehzahldifferenzregelung.

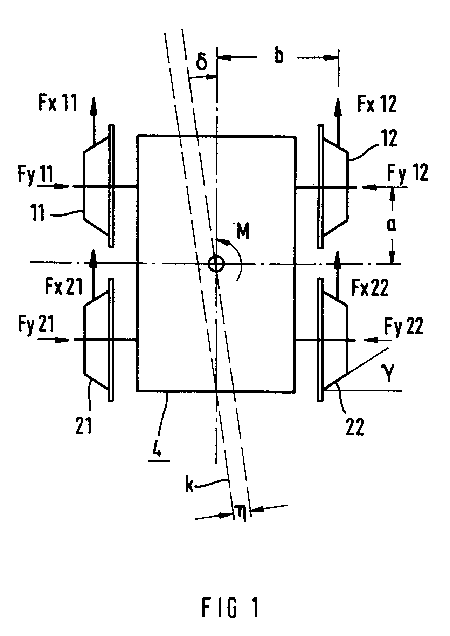

Zur Erläuterung der am Drehgestell 4 angreifenden Kräfte und Hebelarme dient die in Figur 1 dargestellte Skizze eines Drehgestells 4. Dieses Drehgestell 4 ist nicht mit zwei konventionellen Radsätzen (Starrachsen), sondern mit vier Einzelrädern 11,12,21 und 22 ausgerüstet. Jedes Einzelrad 11,12,21 und 22 wird über ein Getriebe von einem Motor angetrieben, wobei wegen der Übersichtlichkeit das Getriebe und ein Motor nicht dargestellt sind. Für die Stellung des Fahrwerks 4 im Gleis ist das Stellmoment M ausschlaggebend. Dieses Moment, das auf die vertikale Achse durch den Drehzapfen bezogen ist, ergibt sich zu:

$$M = (Fx12 + Fx22 - Fx11 - Fx21)b + (Fy12 + Fy21 - Fy11 - Fy22)a,$$

wobei

    Fx     Kraftschlußlängskräfte (Antriebskraft)
    Fy     Querkräfte
    b     halber Abstand der Radaufstandspunkte
    a     halber Achsabstand
    R     Abrollradius
    M     Stellmoment um vertikale Achse
    $\eta$     Querversatz
    $\delta$     Schrägstellungwinkel
    $\gamma$     Neigungswinkel des Radprofils.

Die Querkräfte Fyij sind abhängig von dem vom Rad aufzunehmenden Gewichtsanteil des Fahrzeugs, dem Neigungswinkel des Radprofils im jeweiligen Aufstandspunkt, dem Stellungswinkel des Drehgestells zur Gleislängsachse und dem Gleitwinkel Rad/Schiene. Bei Querverschiebung des Radsatzes im Gleis ändern sich die Querkräfte im wesentlichen nur dann, wenn sich der Neigungswinkel des Radprofils ändert. Bei dem vorgeschlagenen Radprofil ist dieser Winkel jedoch im möglichen Laufbereich konstant. Dadurch bleiben die Querkräfte konstant und sind an allen Rädern gleich groß, solange kein Anlaufen an den Spurkranz erfolgt. Somit heben sich die Querkräfte in der angegebenen Momentengleichung auf.

Die Kraftschlußlängskräfte Fxij sind die Antriebskräfte des Fahrzeugs und können aktiv über die Steuereinrichtung beeinträchtigt werden. Für die weitere Betrachtung genügt die vereinfachte Berechnungsgleichung für das Stellmoment:

$$M = b(Fx12 + Fx22 - Fx11 - Fx21).$$

Die jeweilige Kraft Fxij ist positiv, wenn die Radumfangsgeschwindigkeit im Radaufstandspunkt größer ist als die Fahrzeuggeschwindigkeit. Entsprechend wird die Kraft Null bei gleicher Geschwindigkeit oder negativ, wenn die Radumfangsgeschwindigkeit geringer als die Fahrzeuggeschwindigkeit ist. Kraftschlußlängskräfte sind daher immer im Zusammenhang mit einem Rad/Schiene-Schlupf zu sehen.

Wird das Drehgestell 4 und damit die Räder 11,12,21 und 22 unter einem Winkel δ schräg zur Radebene bewegt, so gleitet es mit einem Querschlupf relativ zur Schiene. Der Relativbewegung ist eine durch den Rad/Schiene-Kraftschluß hervorgerufene Kraftschlußseitenkraft Fy entgegengerichtet. Dieses führt zu einer unerwünschten Reibleistung, welche in Wärme, Verschleiß und Geräusch umgesetzt wird. Die Schrägstellung kann sogar zum Anlaufen des Spurkranzes führen und wird nur dadurch verhindert, daß beim schräg um die Vertikalachse ausgelenktem Drehgestell 4 eine Wendemoment M entsteht, das eine Rückbewegung in eine zur Fahrtrichtung parallele bzw. zum Gleis parallele Stellung bewirkt, d.h. die Schrägstellung δ wieder zu Null wird.

Ein Querversatz η allein erzeugt weder Verschleiß noch Geräusche und ist daher ohne spurführungstechnische Nachteile. Aufgrund der Konizität der Radprofile aber ergeben sich unterschiedliche Abrollradien und es entstehen je nach gewähltem Antriebskonzept Unterschiede in den Kraftschlußlängskräften, wodurch eine Wendemoment M entsteht.

Es sei nun angenommen, daß dieses Drehgestell 4 aus einem vorderen Radsatz, bestehend aus den Einzelrädern 11 und 12, und einem hinteren Radsatz, bestehend aus den Einzelrädern 21 und 22, besteht, wobei die Motoren jeweils eines Radsatzes parallel geschaltet sind und dieselbe Speisespannung und Speisefrequenz erhalten.

Bei einer Querverschiebung η des Radsatzes ändern sich wegen des Radprofils die Raddurchmesser an den Rad/Schiene-Berührungsstellen. Der Raddurchmesser nimmt von der äußeren Radseite zum Spurkranz hin zu. Der Raddurchmesser wird daher am anlaufenden Rad größer und am ablaufenden Rad kleiner als der Nenndurchmesser. Wegen der annähernd gleichen Drehzahl beider Räder kommt es zu unterschiedlichen Relativgeschwindigkeiten zwischen Rädern und Schienen. Die treibende Kraft des anlaufenden Rades erhöht sich, die des ablaufenden verringert sich.

Bei einem angenommenen Querversatz η nach rechts, bezogen auf die Gleismittellinie k gemäß Figur 1, sind die rechten Kraftschlußlängskräfte Fx12 und Fx22 größer als die linksseitigen Kraftschlußlängskräfte Fx11 und Fx21, so daß ein Wendemoment M um die Hochachse des Drehgestells 4 entsteht. Das Drehgestell 4 stellt sich um den Winkel δ (negativ) schräg zur Bewegungsrichtung. Also löst ein Querversatz η unmittelbar eine unerwünschte Schrägstellung δ aus. So wie vorher eine Querauslenkung nach rechts zu einer Schrägstellung δ führte, zieht umgekehrt die Schrägstellung δ eine Querauslenkung η nach links nach sich. Beide Bewegungen sind miteinander gekoppelt. Sie ändern sich im ständigen Wechsel. Einmal ausgelenkt, kommt der Radsatz so schnell nicht mehr zur Ruhe. Ein derartiges Drehgestell 4 mit Starrachsverhalten bewegt sich wellenförmig im Spurkanal (Sinuslauf), wobei ein Anlaufen in den Spurkranz bei geraden Gleisstrecken nicht zu erwarten ist.

Bei Kurvenfahrt, wenn die Abrollbedingung infolge zu geringem Bogenradius nicht mehr gegeben ist, kann ein ständiges Anlaufen nicht verhindert werden. Hinzu kommen unzulässig hohe Drehmomentunterschiede zwischen den parallel geschalteten Fahrmotoren.

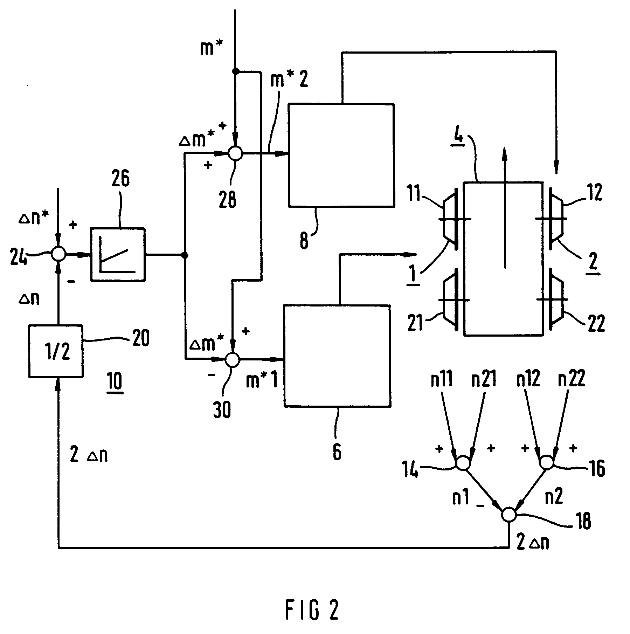

In der Figur 2 ist ein Blockschaltbild einer Vorrichtung zur Durchführung des erfindungsgemäßen Verfahrens zur Verbesserung der Laufeigenschaft eines mit mehreren Einzelrädern 11,12,21 und 22 versehenen Fahrwerks 4, auch Drehgestell genannt, dargestellt. Jedem Einzelrad 11,12,21 und 22 ist ein Fahrmotor zugeordnet, der aus Übersichtlichkeitsgründen nicht näher dargestellt sind. Bei diesem Fahrwerk 4 werden die Einzelräder 11,12,21 und 22 radblockweise gespeist. Dazu werden die Fahrmotoren der Einzelräder 11 und 21 von einem ersten Stellglied, beispielsweise einem Umrichter, insbesondere einem Pulsumrichter, und die Fahrmotoren der Einzelräder 12 und 22 werden von einem zweiten Stellglied, beispielsweise einem Umrichter, insbesondere einem Pulsumrichter, gespeist. Auch diese Stellglieder sind aus Übersichtlichkeitsgründen nicht näher dargestellt. Es besteht somit die Möglichkeit, den linken Radblock 1 mit anderem Drehmoment und Drehzahl zu betreiben als den rechten Radblock 2, was insbesondere für zwängungsfreie Kurvenfahrt von Vorteil ist.

Die Antriebsmomente m*1 und m*2 der links- und rechtsseitigen Motoren werden mit Hilfe von zwei Steuer- und Regeleinrichtungen 6 und 8 annähernd gleich groß eingestellt. Prägt man mittels dieser beiden Steuer- und Regeleinrichtungen 6 und 8 auf beiden Seiten des Drehgestells 4 exakt die gleichen Motor-Drehmomente m*1 und m*2 ein, dürfte man unter der theoretischen Annahme von gleichen Abrollradien an allen vier Rädern 11,12,21 und 22, einen Geradeauslauf des Drehgestells 4 erwarten.

Ein leichter Querversatz $\eta$ jedoch führt wegen der Kegelneigung der Radprofile zu unterschiedlichen Abrollhalbmessern und somit zu unterschiedlichen Kraftschlußlängskräften Fxij.

Bei einem angenommenen Querversatz $\eta$ des Drehgestells 4 nach links bedingt für die linken Räder 11 und 21 einen größeren Abrollradius. Die Regelung sorgt dafür, daß die Momente m*1 und m*2 gleich bleiben. Bei unterschiedlichen Wirkradien und gleichen Momenten ergeben sich unterschiedliche Antriebskräfte. Ist, wie in diesem Beispiel, der Wirkradius auf der linken Seite größer, dann muß wegen der Gleichheitsbedingung der Momente die Antriebskraft links, d.h. die Kraftschlußlängs-Kräfte Fx11 und Fx21, kleiner sein. Durch das positive Drehmoment wird der Spurkranz des linken vorderen Rades gegen die Schiene gedrückt und des linken hinteren Rades von der Schiene weggedrückt. Das Drehgestell 4 stellt sich schief. Das Drehgestell 4 kann sich von selbst aus dieser Schrägstellung nicht mehr befreien. Selbst bei exakt gleichen Motordrehmomenten m*1 und m*2 erfolgt zwangsläufig ein Anlaufen der Räder 11,12,21 und 22.

Modifiziert man die für die Starrachse definierte Abrollbewegung in der Weise, daß man nicht die Abrollradien, sondern die Drehzahlen der Räder den Bogenlängen verhältnisgleich setzt, so erhält man die notwendige Differenz der Raddrehzahlen zu:

$\Delta n^*/n = 2b/r$ (Abrollbedingung),

wobei

| r | = Bogenradius |
| 2b | = Spurweite |
| n | = Fahrwerk |
| $\Delta n^*$ | = Drehzahldifferenz-Sollwert |

sind.

Eine der Drehmomentregelung überlagerte Drehzahldifferenzregelung 10 sorgt für eine jeweils zu einem Kurvenradius r passende Drehzahldifferenz $\Delta n^*$ gemäß der Abrollbedingung.

Diese überlagerte Drehzahldifferenzregelung 10 besteht eingangsseitig aus zwei Addierern 14 und 16, die ausgangsseitig mit einem ersten Vergleicher 18 verknüpft sind. Der Addierer 14 summiert die Raddrehzahlen n11 und n21 des linken Radblocks 1 zu einer Radblock-Drehzahl n1 und der Addierer 16 summiert die Raddrehzahlen n12 und n22 des rechten Radblocks 2 zu einer Radblock-Drehzahl n2. Der erste Vergleicher 18 bildet einen Drehzahldifferenz-Istwert $2\Delta$ n = n2-n1. Der Ausgang des ersten Vergleichers 18 ist ausgangsseitig mit einem Konstantglied 20 versehen, der den ermittelten Drehzahldifferenz-Istwert mit 1/2 multipliziert. Am Ausgang des Konstantgliedes 20 steht der Drehzahldifferenz-Istwert $\Delta n$ des Drehgestells 4 an. Dieser Istwert $\Delta n$ wird mittels eines zweiten Vergleichers 24 und einem vorbestimmten Drehzahldifferenz-Sollwert $\Delta n^*$ verglichen, wobei aus der vorhandenen Regeldifferenz mittels eines Reglers 26 eine Stellgröße $\Delta m^*$ erzeugt wird. Diese Stellgröße $\Delta m^*$ wird einem Addierer 28 und einem Subtrahierer 30 zugeführt, an deren ersten Eingängen ein Fahrhebel-Sollwert m*, auch Drehmoment-Sollwert genannt, ansteht. Der Ausgang des Addierers 28 ist mit der Steuer- und Regeleinrichtung 8 für das Stellglied der Motoren der Einzelräder 12 und 22 des rechten Radblocks 2 und der Ausgang des Subtrahierers 30 ist mit der Steuer- und Regeleinrichtung 6 für das Stellglied der Motoren der Einzelräder 11 und 21 des linken Radblocks 1 verbunden. Am Ausgang des Addierers 28 bzw. des Subtrahierers 30 steht ein Drehmoment-Sollwert m*2 bzw. m*1 an, so daß in Abhängigkeit eines Kurvenradius r die Drehzahl n2 des rechten Radblocks 2 beispielsweise sich erhöht und die Drehzahl n1 des linken Radblocks 1 sich im gleichen Maße verringert.

Bei Kurvenfahrten wird der Regelung ein Drehzahldifferenzwert $\Delta n$ entsprechend einem bekannten Kurvenradius r eingestellt. Die beiden Radblöcke 1 und 2 des Drehgestells 4 erhalten eine dem Bogenradius r entsprechende fest eingestellte Drehzahldifferenz, also ebenfalls eine starre Drehzahlkopplung mit $\Delta n^*$ ungleich Null. Damit ist bei beliebigem Bogenradius die Abrollbedingung erfüllt. Das Laufverhalten in Kurven ist somit wegen der erfüllten Abrollbedingung besser als bei starren Achsen.

Bei Geradeauslauf ist $\Delta n^* = 0$. Die Drehzahldifferenzregelung 10 sorgt in diesem Fall für gleiche Drehzahlen n1 und n2 der beiden Radblöcke 1 und 2 des Drehgestells 4.

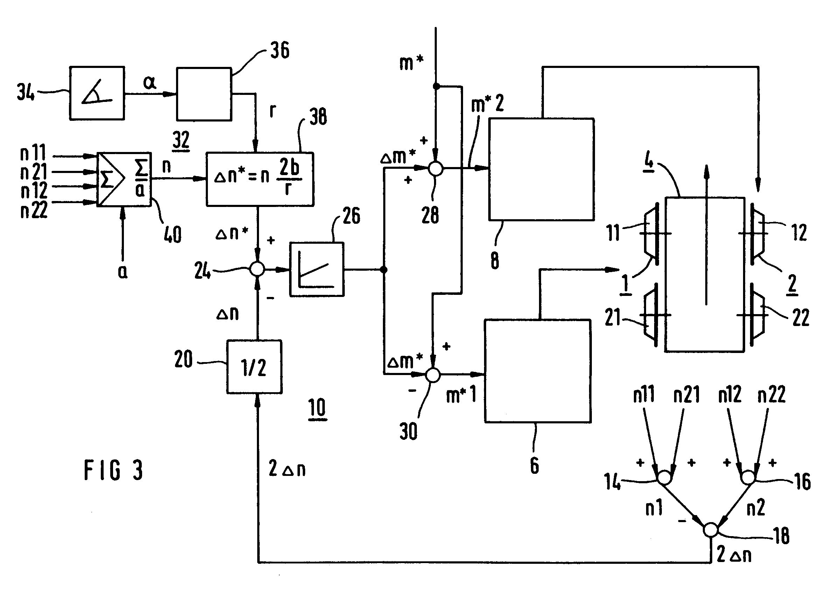

Die Figur 3 zeigt ein Blockschaltbild einer vorteilhaften Ausführungsform der Vorrichtung nach Figur 2. Der Unterschied zur Vorrichtung der Figur 2 liegt darin, daß bei dieser Vorrichtung eine Schaltungsanordnung 32 zur Ermittlung des Drehzahldifferenz-Sollwertes $\Delta n^*$ angegeben ist. Diese Schaltungsanordnung 32 besteht aus einem Gelenkwinkelgeber 34, dem ein Umrechnungsglied 36 nachgeschaltet ist. Ausgangsseitig ist dieses Umrechnungsglied 36 mit einer Recheneinheit 38 verknüpft, deren zweiter Eingang mit einem Mittelwertbildner 40 verknüpft ist. Ausgangsseitig ist diese Recheneinheit 38 mit dem positiven Eingang des zweiten Vergleichers 24 verbunden. Den ersten Eingängen des Mittelwertbildners 40 sind die ermittelten Raddrehzahlen n11,n12,n21 und n22 und dem zweiten Eingang der Zahlenwert der Anzahl a der Einzelräder 11,12,21 und 22 des Fahrwerks 4 zugeführt. Dieser Mittelwertbildner 40 summiert die anstehenden Raddrehzahlen n11,n12,n21 und n22 und teilt diese Summe durch die Anzahl a der Einzelräder 11,12,21 und 22 des Fahrwerks 4, so daß am Ausgang eine Fahrwerk-Drehzahl n ansteht. Der Gelenkwinkel $\alpha$, der mittels des Gelenkwinkelgebers 34 ermittelt wird, wird mit Hilfe des Umrechnungsgliedes 36 in einen Bogenradius r umgerechnet. In der Recheneinheit 38 ist die genannte Abrollbedingung, die nach dem Drehzahldifferenz-Sollwert $\Delta n^*$ aufgelöst ist, abgespeichert. In Abhängigkeit des Bogenradius r der durchfahrenen Kurve und der Fahrwerk-Drehzahl n wird der zugehörige Drehzahldifferenz-Sollwert $\Delta n^*$ bestimmt. Mittels der überlagerten Drehzahldifferenzregelung 10 erhalten die beiden Radblöcke 1 und 2 des Drehgestells 4 eine dem Bogenradius r entsprechende fest eingestellte Drehzahldifferenz.

Durch diese überlagerte Drehzahldifferenzregelung 10 wird bei Kurvenfahrten immer die Abrollbedingung erfüllt, wodurch das Anlaufverhalten des Fahrwerks 4 in Kurven wesentlich verbessert wird. Somit verringert sich der Verschleiß des Rades und der Schiene und die Laufeigenschaft des Fahrwerks 4 verbessert sich erheblich.

Das beschriebene Verfahren kann auch bei Schienenfahrzeugen mit Radpaaren (also ohne Drehgestell) zur Anwendung kommen.

## Patentansprüche

1. Verfahren zur Verbesserung der Laufeigenschaft eines mit mehreren Einzelrädern (11,12,21,22) versehenen Fahrwerks (4) eines Schienenfahrzeugs, deren Fahrmotoren mittels zweier Steuer- und Regeleinrichtungen (6,8) radblockweise gespeist werden, wobei aus den ermittelten Raddrehzahlen (n11,n12,n21, n22) zwei Radblock-Drehzahlen (n1,n2) bestimmt werden, aus denen ein Drehzahldifferenz-Istwert ($\Delta n$) gebildet wird, der mit einem vorbestimmten Drehzahldifferenz-Sollwert ($\Delta n^*$) verglichen wird, wobei in Abhängigkeit dieser Regeldifferenz eine Stellgröße ($\Delta m^*$) erzeugt wird, die durch Addition bzw. Subtraktion eines Fahrhebel-Sollwertes ($m^*$) einen Drehmoment-Sollwert ($m^*1$ bzw. $m^*2$) für jeweils einen Radblock (11,21 bzw. 12,22) bildet.

2. Verfahren nach Anspruch 1, wobei der Drehzahldifferenz-Sollwert ($\Delta n^*$) in Abhängigkeit eines ermittelten Bogenradius (r) und einer Fahrwerks-Drehzahl (n) gemäß folgender Abrollbedingung:

$$\Delta n^*/n = 2b/r$$

mit
  $2b$ = Spurweite
  $r$ = Bogenradius
  $n$ = Fahrwerk-Drehzahl
  $\Delta n^*$ = Drehzahldifferenz-Sollwert
ermittelt wird.

3. Verfahren nach Anspruch 2, wobei die Fahrwerk-Drehzahl (n) aus der Summe der Raddrehzahlen (n11,n12,n21,n22) geteilt durch die Anzahl (a) der Räder (11,12,21,22) bestimmt wird.

4. Vorrichtung zur Durchführung des Verfahrens nach Anspruch 1, für ein mit mehreren Einzelrädern (11,12,21,22) versehenes Fahrwerk (4) eines Schienenfahrzeugs, deren Fahrmotoren mittels zweier Steuer- und Regeleinrichtungen (6,8) radblockweise gespeist werden, bestehend aus zwei Addierern (14,16), die jeweils aus den ermittelten Drehzahlen (n11, n21 bzw. n12,n22) der Einzelräder (11,21 bzw. 12,22) eines Radblockes (1 bzw. 2) eine Radblock-Drehzahl (n1 bzw. n2) bestimmen, wobei diese Addierer (14,16) ausgangsseitig mit einem ersten Vergleicher (18) verknüpft sind, dessen Ausgang über ein Konstantglied (20) mit einem negativen Eingang eines zweiten Vergleichers (24), an dessen positiven Eingang ein Drehzahldifferenz-Sollwert ($\Delta n^*$) ansteht, verknüpft ist, wobei der Ausgang dieses zweiten Vergleichers (24) mittels eines Reglers (26) mit einem Addierer (28) und einem Subtrahierer (30) verbunden ist, an deren ersten Eingängen jeweils ein Fahrhebel-Sollwert ($m^*$) ansteht und deren Ausgänge jeweils mit einer Steuer- und Regeleinrichtung (6,8) des Fahrwerks ( 4) verknüpft sind.

5. Vorrichtung nach Anspruch 4, wobei der positive Eingang des zweiten Vergleichers (24) mit dem Ausgang einer Recheneinheit (38) verknüpft ist, deren einer Eingang mit einem Mittelwertbildner (40) und deren anderer Eingang über ein Umrechnungsglied (36) mit einem Winkelgeber (34) verbunden sind.

6. Vorrichtung nach Anspruch 5, wobei dem Mittelwertbildner (40) die Raddrehzahlen (n11,n12,n21,n22) und der Zahlenwert der Anzahl (a) der Einzelräder (11,12,21,22) des Fahrwerks (4) zugeführt sind.

## Claims

1. Method for improving the running characteristic of a running gear (4) of a rail vehicle, which running gear is provided with a plurality of individual wheels (11, 12, 21, 22) whose traction motors are supplied, wheel block by wheel block, by means of two open-loop and closed-loop control systems (6, 8), wherein there are determined, from the wheel speeds determined (n11, n12, n21, n22), two wheel-block speeds (n1, n2) from which an actual speed difference value ($\Delta n$) is formed which is compared with a predetermined desired speed difference value ($\Delta n^*$) and, as a function of this error signal, a manipulated variable ($\Delta m^*$) is generated which forms a desired torque value (m*1 or m*2, respectively) for each wheel block (11, 21 or 12, 22) by addition or substraction, respectively, of a desired lever-arm value (m*).

2. Method according to Claim 1, wherein the desired speed difference value ($\Delta n^*$) is determined as a function of a determined arc radius (r) and a running-gear speed (n) in accordance with the following rolling condition:

   $$\Delta n^*/n = 2b/r$$

   where
   | | |
   |---|---|
   | 2b | = track width, |
   | r | = arc radius, |
   | n | = running-gear speed, |
   | $\Delta n^*$ | = desired speed difference value. |

3. Method according to Claim 2, wherein the running-gear speed (n) is determined from the sum of the wheel speeds (n11, n12, n21, n22) divided by the number (a) of the wheels (11, 12, 21, 22).

4. Device for carrying out the method according to Claim 1 for a running gear (4) of a rail vehicle, which running gear is provided with a plurality of individual wheels (11, 12, 21, 22) whose traction motors are supplied, wheel block by wheel block, by means of two open-loop and closed-loop systems (6, 8) comprising two adders (14, 16) which each determine a wheel-block speed (n1 or n2) from the determined speeds (n11, n21 or n12, n22) of the individual wheels (11, 21 or 12, 22) of a wheel block (1 or 2), wherein the outputs of said adders (14, 16) are connected to a first comparator (18) whose output is connected via a constant-factor component (20) to a negative input of a second comparator (24) to whose positive input a desired speed difference value ($\Delta n^*$) is applied, the output of said second comparator (24) being connected by means of a closed-loop controller (26) to an adder (28) and a subtracter (30) to whose first inputs a desired lever-arm value (m*) is applied in each case and whose outputs are connected in each case to an open-loop and closed-loop control system (6, 8) of the running gear (4).

5. Device according to Claim 4, wherein the positive input of the second comparator (24) is connected to the output of an arithmetic unit (38) whose one input is connected to an averaging unit (40) and whose other input is connected to an angle sensor (34) via a conversion component (36).

6. Device according to Claim 5, wherein the wheel speeds (n11, n12, n21, n22) and the numerical value of the number (a) of individual wheels (11, 12, 21, 22) of the running gear (4) are fed to the averaging unit (40).

## Revendications

1. Procédé d'amélioration des qualités de roulement d'un bogie (4), pourvu de plusieurs roues indépendantes (11, 12, 21, 22), d'un véhicule sur rails, dont les moteurs de traction sont alimentés par blocs de roues au moyen de deux dispositifs de commande et de réglage (6, 8), et dans lequel sont déterminés, à partir des nombres de tours de roues (n11, n12, n21, n22) détectés, deux nombres de tours de blocs de roues (n1, n2), à partir desquels est formée une valeur réelle de la différence des nombres de tours ($\Delta n$), qui est comparée à une valeur de consigne ($\Delta n^*$) prédéterminée de la différence des nombres de tours, une grandeur d'ajustage ($\Delta m^*$) étant produite en fonction de cette différence de réglage, laquelle grandeur constitue, par addition ou par soustraction d'une valeur de consigne de manette d'accélérateur (m*) une valeur de consigne du couple de rotation (m*1 ou m*2) pour chaque fois un bloc de roues (11, 21 ou 12, 22).

2. Procédé selon la revendication 1, dans lequel la valeur de consigne ($\Delta n^*$) de la différence des nombres de tours est déterminée en fonction du rayon de courbure (r) et d'un nombre de tours (n) du bogie selon la condition de roulement :

   $$\Delta n^*/n = 2b/r$$

   où
   | | |
   |---|---|
   | 2b | = écartement de la voie |

r     = rayon de courbure
n     = nombre de tours du bogie
$\Delta n^*$  = aleur de consigne de la différence des nombres de tours.

**3.** Procédé selon la revendication 2, dans lequel le nombre de tours (n) du bogie est déterminé à partir de la somme des nombres de tours de roues (n11, n12, n21, n22) divisée par le nombre (a) des roues (11, 12, 21, 22).

**4.** Dispositif pour la mise en oeuvre du procédé selon la revendication 1, pour un bogie (4), pourvu de plusieurs roues indépendantes (11, 12, 21, 22), d'un véhicule sur rails, dont les moteurs de traction sont alimentés par blocs de roues au moyen de deux dispositifs de commande et de réglage (6, 8), consistant en deux additionneurs (14, 16), qui déterminent chacun à partir des nombres de tours (n11, n21 ou n12, n22) détectés des roues indépendantes (11, 21 ou 12, 22) d'un bloc de roues (1 ou 2) un nombre de tours de bloc de roues (n1 ou n2), ces additionneurs (14, 16) étant reliés, du côté sortie, à un premier comparateur (18), dont la sortie est reliée, par l'intermédiaire d'un élément à constante (20), à une entrée négative d'un second comparateur (24), à l'entrée positive duquel est appliquée une valeur de consigne ($\Delta n^*$) de la différence des nombres de tours, la sortie de ce second comparateur (24) étant reliée au moyen d'un régulateur (26) à un additionneur (28) et à un soustracteur (30), aux premières entrées desquels est appliquée respectivement une valeur de consigne (m*) de la manette d'accélérateur et dont les sorties sont chacune reliées à un dispositif de commande et de réglage (6, 8) du bogie (4).

**5.** Dispositif selon la revendication 4, dans lequel l'entrée positive du second comparateur (24) est reliée à la sortie d'une unité de calcul (38), dont une entrée est reliée à un moyenneur (40) et dont l'autre entrée est reliée, par l'intermédiaire d'un élément de conversion (36), à un capteur angulaire (34).

**6.** Dispositif selon la revendication 5, dans lequel le moyenneur (40) reçoit les nombres de tours de roues (n11, n12, n21 n22) et la valeur numérique du nombre (a) des roues indépendantes (11, 12, 21, 22) du bogie (4).

FIG 1

FIG 2

FIG 3